# EUROPEAN PATENT SPECIFICATION

(11) **EP 1 464 964 B1**
(45) Date of publication and mention of the grant of the patent: **15.10.2008**
(21) Application number: 04251934.8
(22) Date of filing: 31.03.2004
(51) Int. Cl.: G01N 35/00

(54) **Test element holder with a probe guide for an analyzer**
Testelemente-Halter mit Sonden-Führung für einen Analysator
Support pour élements analytiques avec sonde guidée pour un analysateur

(30) Priority: 31.03.2003 US 403153
(43) Date of publication of application: 06.10.2004
(73) Proprietor: ORTHO-CLINICAL DIAGNOSTICS, INC., Rochester, NY 14626-5101 (US)
(72) Inventor: Tomasso, David, Rochester, NY 14626 (US); Jakubowicz, Raymond, Rush, NY 14543 (US); Barry, James Vanselow, Rochester, NY 14610 (US)
(74) Representative: Mercer, Christopher Paul

(56) References cited:
- EP-A- 0 513 618
- EP-A- 0 722 089
- EP-A- 0 747 708
- US-A- 4 347 750
- US-A- 5 346 672
- US-A1- 2002 098 116

## Description

### BACKGROUND OF THE INVENTION

### Field of the Invention

The present invention relates to desktop analyzers in general. In particular, the present invention relates to a test element holder that includes a guide for positioning a probe, such as a dispensing or aspirating nozzle, with respect to a test element.

### Description of the Related Art

Desktop analyzers, particularly for veterinary use and point of care (POC) human use, are known in the art. For example, the Abaxis Vetscan™ and Hemagen Analyst™ are both desktop analyzers for veterinary use. The Vitros DT-60™ is a desktop analyzer manufactured by Ortho-Clinical Diagnostics Corp. Other known analyzers include those POC analyzers described in U.S. Patent Nos. 5,968,329, 5,747,666, 5,980,830 and 5,787,015. U.S. Patent No. 4,965,049 also discloses a modular analyzer system. U.S. Patent No. 5,983,734 discloses a modular automated diagnostic system. U.S. Patent Application Publication No. 2002/0098116 ('116 publication) describes a biochemical analysis system. U.S. Patent No. 4,797,257 describes analyzers and their components that use slides as test elements.

Known diagnostic systems, such as those described above, have generally adequately addressed size issues but often at the expense of functionality, test menu, and productivity. Most known systems perform tests serially on a single patient sample, significantly limiting walk away time for the user to perform other work tasks. These analyzers usually employ a number of dedicated subsystems within the analyzer to perform discrete functions such as sample storage and positioning, reagent storage, and waste collection among others. In some cases, multiple analyzer systems are required to perform the variety of test menus needed in the lab, for example, separate systems to perform immuno rate or electrolyte assays.

In many known systems, whole blood samples must be prepared (e.g., diluted or centrifuged) prior to testing, further limiting the users productivity. Reagent formats can be individual test strips (e.g. such as dry-slide technology), which offer the most cost effective solution and test flexibility, or multiple test formats (e.g., such as the Abaxis Vetscan™ rotor), which severely limit selective assay testing, and, as a result, drive up test costs. Liquid systems may compromise analytical performance when dealing with patient sample background interference compared to analyzers that use a dry-slide format.

There is a need for small, portable *in vitro* diagnostic systems that are capable of automatically performing a wide range of analysis, preferably for both human and animal health care providers and provide the flexibility to execute a variety of operations on patient samples with a high degree of simplicity and cost effectiveness. There are a number of factors that drive the need for improved products including:
Cost Pressures - Lower cost testing solutions that more effectively utilize system reagents and operation.
Ease of Use - Users at the POC and veterinary labs are often less skilled than many technicians working in large lab operations and often perform a wide range of lab and office functions. Systems utilized in these labs must be simple to use but offer a high degree of functionality. Systems that are easy to use with little maintenance or preparation of both sample and instrument are advantageous.
Increased Test Menu Capability - Systems are needed that can perform a wide range of tests without compromising analytical performance due to test format limitations. Current systems penalize the user due to their inflexibility to accommodate individual and panel tests without additional reagent waste associated with pre-configured test formats (e.g. the Abaxis Vetscan™ rotor or the Hemagen Analyst™ Panels+ test rotor).
Size - Lab space is often very limited and portability is often a factor allowing the analyzer to be used at the patient location.

In developing such systems that achieve the above factors, there is a need to minimize the number of moving parts to save on costs and minimize space requirements. Known analyzers often use moving probes (e.g., U.S. Patent Nos. 4,965,049 and 6,013,528 and the '116 publication) to align the probe with the test element, such as a well or slide, in order to dispense or aspirate the fluid being analyzed or assayed. Moving probes can also be used to aspirate and dispense diluent, reagent, wash and reference fluids. In some instances, the probes must be aligned precisely with the target receptacle. This results in expensive and space consuming motors, transmissions and control systems.

EP 0 747 708 A describes a holder of slide test elements for use in an analyzer at a sample-dispensing station, the holder comprising two opposing holding surfaces for holding generally horizontally a slide test element at opposite side edges of the test element, and a tower extending above the holding surfaces for generally centering a dispensing tip above a held slide test element. One of the holding surfaces of the holder extends at least sufficiently for underneath a slide test element held by the holding surfaces to be disposed under an approximate center of the held test element, and includes a raised reference surface located under, and disposed for abutting against, an under-surface of the held slide test element, so that a held slide test element is prevented by the raised reference surface from warping downwardly away from a dispensing tip in the tower.

U.S. Patent No. 4,347,750 describes an analyzer for biological fluids that includes a sample fluid metering device that is movable to a first metering position located directly over a generally planar test element supported in a metering station, and a reference fluid metering apparatus that is movable to a second metering position closely adjacent the first metering position. The reference fluid metering apparatus comprises a reference fluid supply reservoir supported in a location spaced from the metering station, an aspirator operable to aspirate reference fluid from the reservoir and to deposit the fluid on the test element positioned at the metering station and a cam and gear arrangement driven by a single drive motor for moving the aspirator linearly toward and away from the supply reservoir and toward and away from the metering station and for pivotally moving the aspirator between a position spaced from the supply reservoir and a position spaced from the metering station.

### SUMMARY OF THE INVENTION

One object of the invention is to overcome the disadvantages of the known art described above. Another object of the invention is to provide a desktop analyzer that can perform an array of different analysis within a compact space. Another object of the invention is to provide a guide for positioning a fluid probe into registration with a test element to reduce or eliminate the need to provide a separate or complex drive and control system for the probe. Another object of the invention is to provide a guide for positioning a fluid probe that does not require periodic cleaning and prevents carryover from one analysis to the next. Still another object of the invention is to provide a desktop analyzer that incorporates a guide for positioning a fluid probe into registration with a test element. Yet another object of the invention is to provide a method of dispensing or aspirating a fluid into a test element that includes using a guide for positioning a fluid probe into registration with a test element.

The foregoing and other objects of the invention are accomplished according to one aspect of the invention that provides a test element holder (23) for an automated analyzer comprising: a body portion cartridge for holding a plurality of test elements,and characterized by: a probe guide (8) adapted to receive a probe (24) to position the probe (24) in a desired registration with a test element (11), the probe guide (8) being located on top of, and integral with, the cartridge and including a cover disposed over the body portion cartridge and test elements (11); wherein: the probe guide (8) comprises a plurality of openings (22) and wherein at least one opening is oriented in a different direction than the other opening(s).

Another aspect of the invention provides an automated analyzer comprising: a movable fluid supply; the above test element holder; and a probe.

Yet another aspect of the invention provides a method of dispensing or aspirating a fluid into or onto a test element comprising: providing the above test element holder; providing a test element having identifying marks thereon; providing a stationary probe; providing a cover disposed over at least a portion of test element, wherein said cover has a plurality of openings adapted to receive the probe to position the probe in a desired registration with the test element; reading the identifying marks to determine which test is to be performed; and moving the test element and cover into a position to align one of the plurality of holes into alignment with the probe depending on the test to be performed.

Another aspect of the invention provides the above an automated analyzer, being a veterinary analyzer configurable to perform a T4 assay.

Further objects, features and advantages of the present invention will be apparent to those skilled in the art from detailed consideration of the preferred embodiments that follow.

### BRIEF DESCRIPTION OF THE DRAWINGS

Figure 1 shows a perspective view of a desktop analyzer with the test element holder and probe guide according to one embodiment of the present invention.
Figure 2 shows a perspective view of a test element holder that includes a probe guide according to one embodiment of the present invention.
Figure 3 shows a plan view of a desktop analyzer with the test element holder and probe guide according to one embodiment of the present invention.
Figure 4 shows an expanded view of the registration of the fluid probe with the probe guide according to one embodiment of the present invention.
Figure 5 shows a perspective view of a stationary probe and reference fluid probe according to one aspect of the invention.

### DETAILED DESCRIPTION OF PREFERRED EMBODIMENTS

The present invention is directed to an *in vitro* analyzer for use in human and veterinary diagnostics. The analyzer of the present invention allows for simplified panel testing, e.g., a "chem 7" or "chem 20" panel, with the option to add individual tests as required by the user without generating unnecessary reagent waste or unwanted tests. The device is simple to use and allows the user the opportunity to place multiple patient samples on the device that will automatically process the tests without further intervention by the user.

In order to make such a compact design possible, the present invention also provides a test element holder, such as a test element cartridge, that includes a guide for positioning a fluid probe, such as an aspirating or dispensing nozzle with a test element or fluid source being acted upon.

The test element can be a slide containing the reagents necessary for the analysis, the so-called dry-slide technology as described in U.S. Patent No. 4,797,257 or a cup-shaped well as described in U.S. Patent No. 5,441,895. The test element can also be the so-called test strip chemistry.

Broadly, the test element holder contains test elements to be dispensed. Typically this would include multiple test elements. The holder can also be termed a cassette. The holder includes a body portion for holding at least one test element and a guide adapted to receive a probe to position the probe in a desired registration with the test element. Preferably, the test element holder includes a recess for holding the test elements and a cover for the test element or other fluid source being acted upon by the probe. Suitable cassettes are described in U.S. Patent Nos. 4,142,863 and 4,512,952.

Located within the cover is at least two or more preferably three openings adapted to receive the probe tip. The opening(s) can include a surface that extends away from the opening and at least partially surrounds the opening(s). Preferably, the openings are round and the surface has at least a partially cylindrical shape. The surface can open in an increasing manner in a direction away from the hole toward the probe tip to assist in guiding the probe into registration with the test element. For example, the surface can have the shape of a truncated cone.

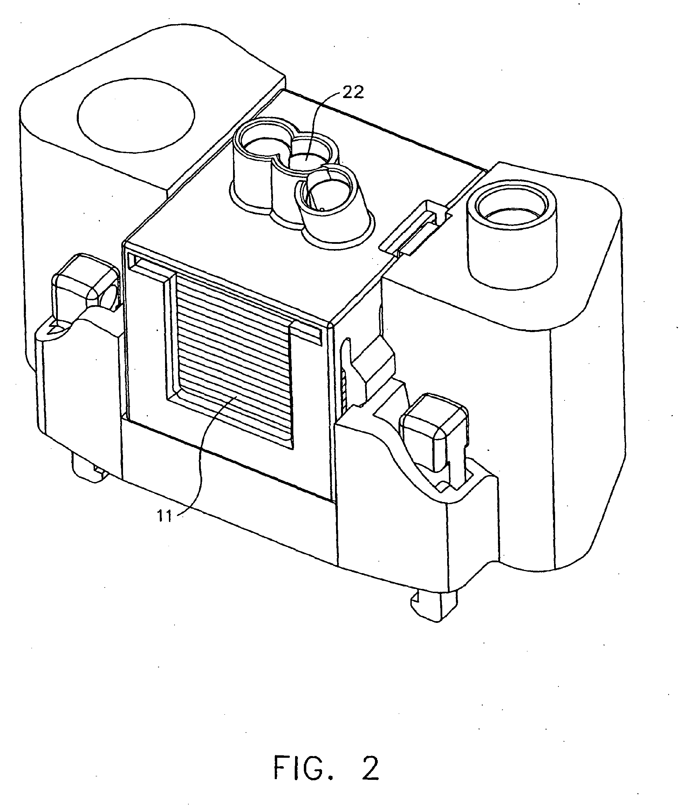

In the present invention, there are a plurality of openings and one of the openings is oriented in a direction that is different than the other openings. This can be provided for a variety of reasons. For example, in some embodiments, there may be provided multiple probes, such as one for sample (e.g., as aspirating or dispersing nozzles) and the other for reference fluids for potentiometric analysis, that are positioned at different angles with respect to the test element or other fluid sources. In this embodiment, the other opening can receive the probe in the same manner as the other opening that is oriented perpendicular to the covering of the test element. It should be understood that the description of the plurality of holes above encompasses designs where the holes share common sectors with each other, such that there are no discontinuities between holes. That is, the holes overlap to a certain extent. This is illustrated in Figure 2. This allows the probe tips to be positioned closer to each other than if the probe guide holes were completely separate. Exemplary probe guides can be found in U.S. Patent No. 4,797,257, described above.

The probe guide is an integral or unitary one-piece construction with the holder, or a separate attached structure. In a preferred embodiment, the guide alone or the integral guide and holder are formed from an injection molded plastic. In some embodiments, the test elements may come pre-packaged in a disposable test element holder. In these embodiments, the probe guide may likewise be disposable. Of course, if the probe guide is separately attachable to the test element holder, it can be independently disposable. At least periodic disposal is particularly advantageous, because it dispenses with cleaning requirements, reduces the likelihood of carryover between samples, and reduces tolerance buildup.

In a preferred embodiment, the test element holder with the probe guide can be included with, and preferably in, a movable fluid supply of the analyzer that can be removably attached to the desktop analyzer. In a preferred embodiment, the test element holder sits in a recess of the movable fluid supply. The movable fluid supply can also include a probe or metering tip holder and a fluid supply section and is preferably of a one-piece construction. The probe tip holder retains a tip, preferably disposable, that will be used to aspirate the fluid in the fluid supply section. The fluid supply section contains the fluid, such as whole blood, serum plasma, urine, wash fluid, or a diluent to be aspirated and dispensed onto the test element. These can also be recesses in the movable fluid supply. Thus, in one unit, all components of the analyzer that are required to be in registration with the probe tip can be included in the fluid supply section.

In another preferred embodiment of the invention, a plurality of test element holders with probe guides are provided. By providing a test element holder with a corresponding probe guide, different test elements, such as potentiometric and colorimetric test elements, or wet and dry test elements, can be used together on a single analyzer, providing a significant benefit in reducing size and providing optimum flexibility in analysis.

Another embodiment of the present invention, which is significant in reducing size and providing optimum flexibility in analysis, involves the probe being stationary and the test element(s) making all significant movements, such as by the rotors described below, to bring the test element and probe into the desired registration. Further details of the movement of the test element, particularly the concentric rotors, can be found below.

The probe or metering nozzle usable in the present invention can include any suitable construction capable of manipulating a fluid in a desired manner, such as those described in U.S. Patent No. 4,965,049. However, unlike known probes used in analyzers, the present invention does not require the probe to have complicated movements. Instead, the probe has simpler movement, such as in a straight line or in a single plane in order to raise and lower the probe with respect to the probe guide, fluid supply section, probe tip holder, etc. However, in some embodiments, the probe may have no movement at all and the test element holder may be lifted or lowered with respect to the probe.

Also, in some embodiments, such as that described below, an additional probe, such as a reference fluid dispensing nozzle, may also be provided. Due to space limitations, it may be desirable to have some movement of the additional probe, such as to move from a fluid source, e.g., a source of reference fluid, to the dispense position over the test element. In such an instance, the movement of the additional probe could be limited to movement in a straight line or a single plane, due to the position of one opening of the probe guide, which would be disposed to receive the additional probe. This would simplify construction by dispensing with the requirement of providing motion and control systems for three dimensional movement. Further details of the fixed probe, can be found below and in copending application entitled "Analyzer Having a Stationary Multifunction Probe" (claiming priority from US Patent Application No. 10/403266 filed on 31st March 2003 - Attorney Docket No. P037184EP) filed concurrently herewith.

The materials of construction for the analyzer, including the probe guide, test element holder and movable fluid supply can include all suitable materials known in the art, such as plastic or metal. The disposable items of the analyzer, such as the test element holder and metering tips are preferably made from environmentally friendly, recyclable materials.

The present invention will now be illustrated in connection with the following detailed preferred embodiment. Of course, the preferred embodiment is intended for illustrative purposes only and is not intended to limit the scope of the invention.

In a preferred embodiment, the analyzer includes dual concentric rotors. Samples may be whole blood, which may be automatically centrifuged prior to metering, or a variety of other sample types including serum, plasma and urine, among others. The concentric rotors work in concert to process a wide variety of analytical tests with little intervention by the user.

The outer reagent rotor carries the movable fluid supply(ies) and eliminates the need for multiple system modules and associated complexity since it is capable of storing and processing samples, test elements, liquid reagents, disposables and waste on a single platform. The multifunctional outer reagent rotor allows the user to place multiple patient samples on the rotor in addition to individual, assay specific test slides in test cartridges. The movable fluid supply also accepts whole blood samples, which can be automatically centrifuged on the analyzer, or prepared samples. The outer reagent rotor is also capable of positioning a variety of movable fluid supplies in various formats that allow for auto dilution of samples and expanded test menu capability through the addition of wash fluids for immuno rate assays. The outer reagent rotor is also capable of accepting a waste collection container to collect the various test slides and metering tips. The outer reagent rotor is automatically positioned to intersect a fixed metering system, that includes the fluid probe, used to aspirate and dispense various fluids.

The inner incubator rotor is used to incubate the slides at a predetermined temperature and then position the slide for measurement by a sensitometry device, such as a reflectometer, electrometer or spectrometer. Test slides are then ejected from the incubator rotor into a common waste collection container placed on the outer reagent rotor. The waste collection container is also able to collect other test consumables such as disposable tips due to the random access positioning capability of the reagent rotor.

All test processing and waste collection is accomplished within the rotors. Additional system features not shown can include an integral printer, user interface keypad/display, electronics and cabinetry.

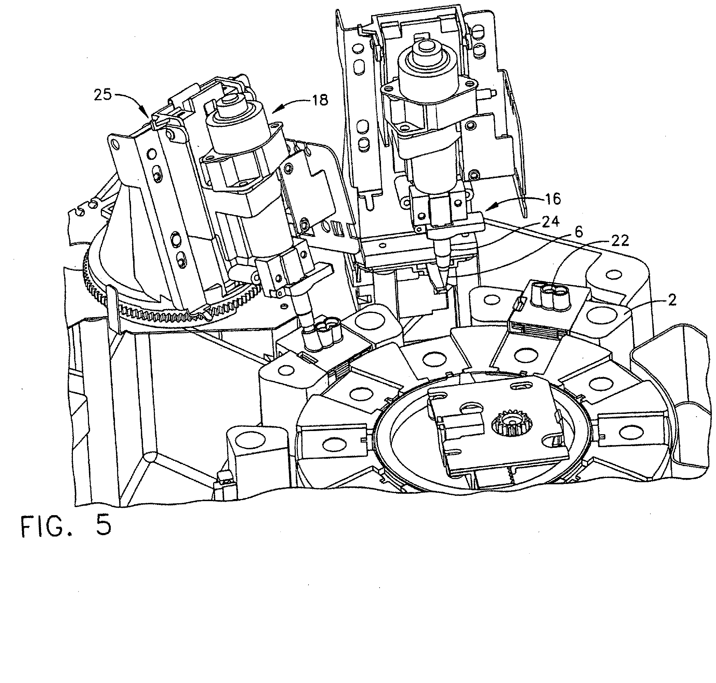

In the embodiment shown in the figures, the outer reagent rotor (1) orients movable fluid supplies (2) concentric to the rotational axis of the outer reagent rotor (1). The reagent rotor is rotated about its center axis by a motor with a sensor (not shown) to determine exact positioning. The movable fluid supplies (2) are reusable and are accurately positioned on the reagent rotor using a locating feature (3), which in this embodiment is a peg that inserts into a hole (not shown) on the underside of the movable fluid supply (2) and anti-rotation feature (4), which in this embodiment is a recess that will accept a pin attached to the end of the spring loaded latch (5). The movable fluid supplies (2) are held in place on the reagent rotor by spring-loaded latches (5) or other means that allow easy loading and unloading of the movable fluid supplies (2) by the user. A single disposable metering tip (6) is placed in a recess on the top of the test cartridge for access by the metering probe system (16) that includes probe (24, Figure 5). A patient's sample is placed in a corresponding recess (7) along the same centerline for access by the probe system. A probe guide (8) for metering registration is located on the top of and integral with, the holder or cartridge (23) (in this case for test slides) to allow for accurate positioning of the metering probe tip (24, Figure 5) during sample dispense onto the slides in the cartridge or holder. The probe guide includes cover (9) and one or more holes (22). The reagent rotor will also accept a variety of different cartridges (23) that expand the functionality of the system at the discretion of the user. These may include diluent cartridges for performing sample dilutions, immuno rate wash cartridge for performing a wash step prior to final reading of immuno rate chemistries among other cartridge formats that are possible. A waste collection cartridge (10) is also positioned on the reagent rotor and is positioned to automatically collect used metering tips and slides after testing is complete.

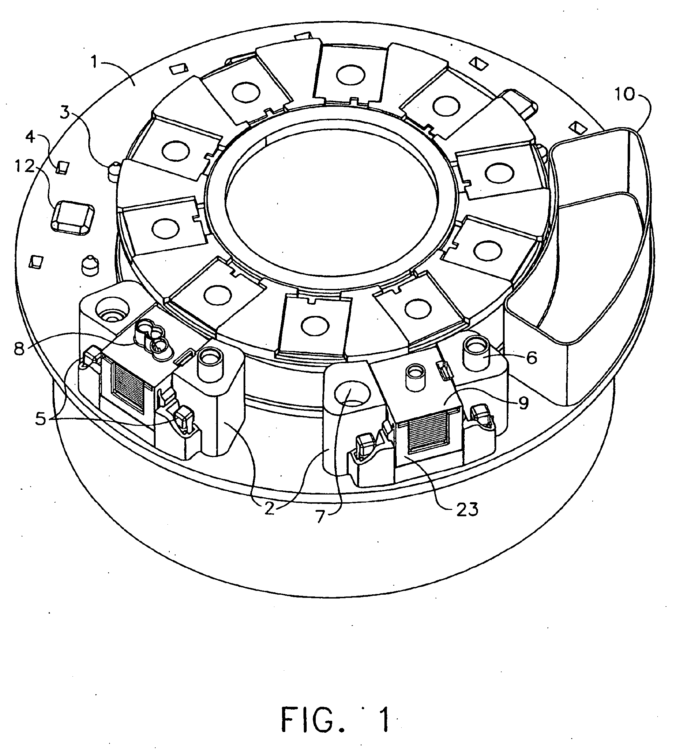

As shown in Figure 2, test slides (11) are loaded into the cartridge (23) prior to processing on the analyzer. The cartridge is capable of accepting a predetermined panel of test slides as well as individual test slides. The test slides (11) are registered up against the inside top surface of the test cartridge directly under the metering registration features by, in this embodiment, a spring-loaded plunger (12, Figure 1) mounted to the reagent rotor.

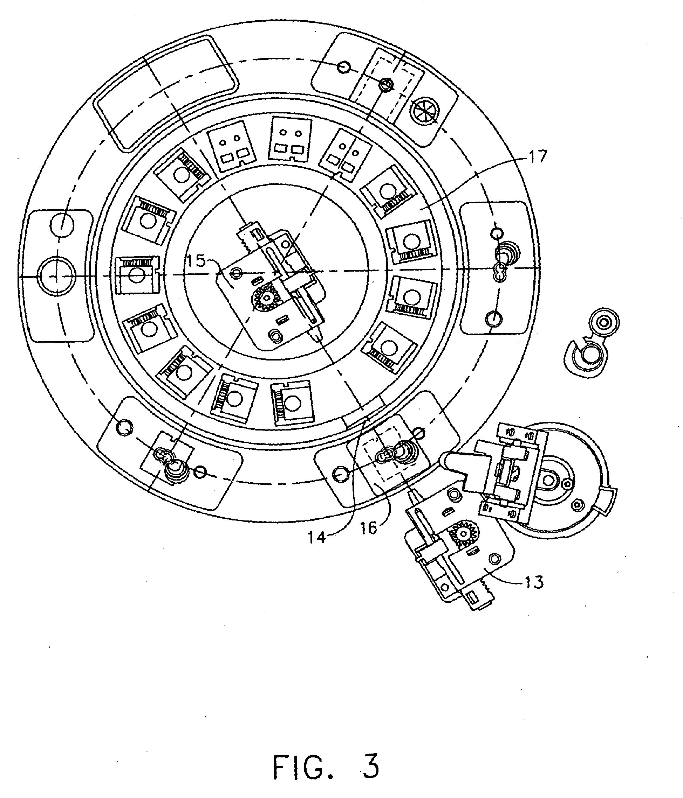

As shown in Figure 3, the reagent rotor (1) is automatically positioned to intersect the various components on the slide cartridge with the fixed location of the metering pump. The reagent rotor is able to move clockwise and/or counterclockwise to position the cartridges at the metering station for sample dispense and slide positioning. The reagent rotor first positions the cartridge (23) containing the test slides in front of the slide dispense mechanism (13) that will move the slide to a fixed barcode reader positioned (14) between the reagent rotor and incubator rotor. The barcode reader reads the unique slide barcode to identify the chemistry type to be tested. A slide insert mechanism (15) reinserts the slide into the test cartridge for processing. The reagent rotor then positions the test cartridge to allow the probe system (16) including probe (24) having tip (6) to access the disposable metering tip followed by sample aspiration from the sample container then sample dispense on the top slide in the test cartridge. After sample dispensing, the top slide is transferred into the concentric test element incubator rotor (17) by the slide dispense mechanism for incubation. The incubator rotor (17) is concentric to the reagent rotor and is rotated about its center axis by a motor with a sensor to determine exact positioning. A reflectometer or spectrometer (not shown) is located below the incubator rotor and is used to measure the slide color change specific to each assay. Immuno rate (IR) chemistries require a wash step prior to final measurement. These slides are inserted into an IR wash cartridge that contains a reusable plastic wash tip and wash fluid supply. The reagent rotor positions the IR wash cartridge at the fixed probe system (16) to perform the necessary wash operation. The IR slide is reinserted into the slide incubator after washing for final measurement.

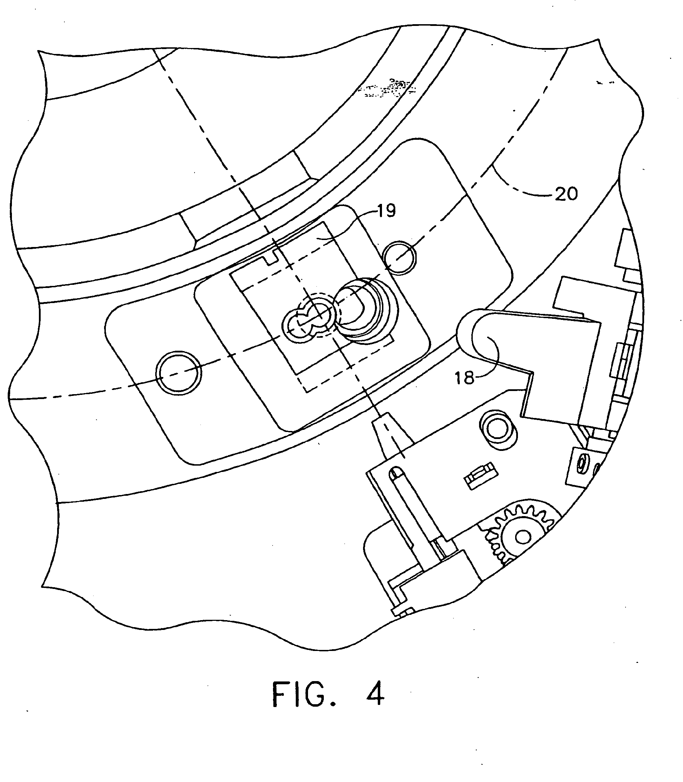

Figure 4 more closely shows an embodiment that uses an additional probe. In this instance, additional probe (18) is a dispensing nozzle that dispenses an electrolyte reference fluid for electrolyte chemistry or potentiometric slides (PM Slides). As shown in Figure 4, the PM slides are processed in a similar manner as the colorimetric (CM) and rate slides. Patient sample and electrolyte reference fluid are dispensed simultaneously on the PM slides (19) while in the test cartridge. In order to eliminate the need for an additional pump movement to intersect the PM slide sample spot, the slide insert mechanism will offset the PM slide slightly. That is, after barcode reading, the slide insert mechanism (15) will push the slide back into the cartridge to a point that aligns the slide underneath the probe guides (22) for metering. The center probe guide is used for simple dispense for CM and immunorate slides. The left and right probe guides are for sample and reference fluid dispense for PM slides. This allows the CM and PM slides to intersect the common reagent rotor centerline (20). The common reagent centerline (20) allows the metering pump to be in a fixed location while all discrete functional interactions with the reagent rotor (1) are accomplished as the reagent rotor is automatically positioned with the fixed location. As shown in Figure 5, the additional metering system (18) may have an additional degree of freedom of movement around pivot (25) to allow access to the reservoir of reference fluid (26).

In another preferred embodiment, the analyzer is a veterinary analyzer that includes a T4 assay.

It will be apparent to those skilled in the art that various modifications and variations can be made to the compounds, compositions and processes of this invention. Thus, it is intended that the present invention cover such modifications and variations, provided they come within the scope of the appended claims.

## Claims

1. A test element holder (23) for an automated analyzer comprising:
a body portion cartridge for holding a plurality of test elements, and **characterized by**:
a probe guide (8) adapted to receive a probe (24) top position the probe (24) in a desired registration with a test element (11), the probe guide (8) being located on top of, and integral with, the cartridge and including a cover disposed over the body portion cartridge and test elements (11);
wherein:
the probe guide (8) comprises a plurality of openings (22) and wherein at least one opening is oriented in a different direction than the other opening(s).

2. A, test element holder as claimed in claim 1, further comprising a surface extending away from the cover and surrounding at least a portion of the opening.

3. A test element holder as claimed in claim 2, wherein the surface is cylindrical.

4. A test element holder as claimed in claim 2, wherein the surface is in the shaped of a truncated cone.

5. A test element holder as claimed in claim 2, wherein the surface is not perpendicular to the cover.

6. A test element holder as claimed in claim 5, wherein the plurality of openings comprises three openings, and the surface of one of the openings is not perpendicular to the cover.

7. A test element holder as claimed in claim 1 or claim 2, wherein the cover is integral with the remainder of the test elements.

8. An automated analyzer comprising:
a movable fluid supply (2);
a test element holder (23) according to any one of claims 1 to 7; and
a probe (24).

9. An automated analyzer as claimed in claim 8, wherein the test element holder is disposed within the movable fluid supply.

10. An automated analyzer as claimed in claim 8 or claim 9, wherein the analyzer is a desk top analyzer.

11. An automated analyzer as claimed in any one of claims 8 to 10, wherein the movable fluid supply comprises a fluid supply section and a probe tip holder.

12. An automated analyzer as claimed in claim 11, wherein the fluid supply section includes a recess and the probe tip holder includes a recess.

13. An automated analyzer as claimed in claim 11 or claim 12, wherein the fluid supply and probe tip holder are integral.

14. An automated analyzer as claimed in any one of claims 8 to 13, wherein the movable fluid supply further comprises a recess for the test element holder.

15. An automated analyzer as claimed in claim 14, wherein the recess is disposed between the fluid supply section supply and the probe tip holder.

16. An automated analyzer as claimed in any one of claims 8 to 15, wherein the probe comprises an aspirating and/or dispensing nozzle.

17. An automated analyzer as claimed in any one of claims 8 to 16, wherein the test element holder comprises a plurality of test holders.

18. An automated analyzer as claimed in claim 17, wherein at least one of the test element holders contains different test elements than the test elements of other test element holders.

19. An automated analyzer as claimed in claim 18, wherein the different test elements are potentiometric test elements and the test elements of the other test element holders are colorimetric test elements.

20. A method of dispensing or aspirating a fluid into or onto a test element comprising:
providing a test element holder as in claim 1;
providing a test element having identifying marks thereon;
providing a stationary probe;
reading the identifying marks to determine which test is to be performed; and moving the test element and cover into a position to align one of the plurality of holes into alignment with the probe depending on the test to be performed.

21. An automated analyzer as claimed in any of claims 8 to 19, being a veterinary analyzer configurable to perform a T4 assay.

## Patentansprüche

1. Testelementhalter (23) für ein automatisiertes Analysegerät, umfassend:
eine Körperabschnittskartusche zum Halten einer Mehrzahl von Testelementen,
**gekennzeichnet durch**:
eine Sondenführung (8) zur Aufnahme einer Sonde (24), um die Sonde (24) in einer gewünschten Ausrichtung mit einem Testelement (11) zu positionieren, wobei sich die Sondenführung (8) auf der Kartusche befindet und damit einteilig ausgebildet ist, und eine Abdeckung enthält, die sich über der Körperabschnittskartusche und den Testelementen (11) befindet;
wobei
die Sondenführung (8) eine Mehrzahl von Öffnungen (22) umfasst und wobei wenigstens eine Öffnung in eine andere Richtung orientiert ist als die andere(n) Öffnung(en).

2. Testelementhalter nach Anspruch 1, ferner umfassend eine Fläche, die sich von der Abdeckung weg erstreckt und wenigstens einen Teil der Öffnung umgibt.

3. Testelementhalter nach Anspruch 2, **dadurch gekennzeichnet, dass** die Fläche zylindrisch ist.

4. Testelementhalter nach Anspruch 2, **dadurch gekennzeichnet, dass** die Fläche die Form eines Kegelstumpfes besitzt.

5. Testelementhalter nach Anspruch 2, **dadurch gekennzeichnet, dass** die Fläche nicht senkrecht zur Abdeckung steht.

6. Testelementhalter nach Anspruch 5, **dadurch gekennzeichnet, dass** die Mehrzahl der Öffnungen drei Öffnungen umfasst, und die Fläche einer der Öffnungen nicht senkrecht zur Abdeckung steht.

7. Testelementhalter nach Anspruch 1 oder Anspruch 2, **dadurch gekennzeichnet, dass** die Abdeckung mit den übrigen Testelementen einteilig ausgebildet ist.

8. Automatisiertes Analysegerät, umfassend:
eine bewegliche Flüssigkeitsversorgung (2);
einen Testelementhalter (23) nach einem der Ansprüche 1 bis 7; und
eine Sonde (24).

9. Automatisiertes Analysegerät nach Anspruch 8, **dadurch gekennzeichnet, dass** sich der Testelementhalter innerhalb der beweglichen Flüssigkeitsversorgung befindet.

10. Automatisiertes Analysegerät nach Anspruch 8 oder Anspruch 9, **dadurch gekennzeichnet, dass** das Analysegerät ein Tischanalysegerät ist.

11. Automatisiertes Analysegerät nach einem der Ansprüche 8 bis 10, **dadurch gekennzeichnet, dass** die bewegliche Flüssigkeitsversorgung einen Flüssigkeitsversorgungsabschnitt und einen Sondenspitzenhalter umfasst.

12. Automatisiertes Analysegerät nach Anspruch 11, **dadurch gekennzeichnet, dass** der Flüssigkeitsversorgungsabschnitt eine Aussparung enthält und der Sondenspitzenhalter eine Aussparung enthält.

13. Automatisiertes Analysegerät nach Anspruch 11 oder Anspruch 12, **dadurch gekennzeichnet, dass** die Flüssigkeitsversorgung und der Sondenspitzenhalter einteilig sind.

14. Automatisiertes Analysegerät nach einem der Ansprüche 8 bis 13, **dadurch gekennzeichnet, dass** die bewegliche Flüssigkeitsversorgung ferner eine Aussparung für den Testelementhalter umfasst.

15. Automatisiertes Analysegerät nach Anspruch 14, **dadurch gekennzeichnet, dass** sich die Aussparung zwischen dem Flüssigkeitsversorgungsabschnitt und dem Sondenspitzenhalter befindet.

16. Automatisiertes Analysegerät nach einem der Ansprüche 8 bis 15, **dadurch gekennzeichnet, dass** die Sonde eine Ansaug- und/oder Abgabedüse umfasst.

17. Automatisiertes Analysegerät nach einem der Ansprüche 8 bis 16, **dadurch gekennzeichnet, dass** der Testelementhalter eine Mehrzahl von Testhaltern umfasst.

18. Automatisiertes Analysegerät nach Anspruch 17, **dadurch gekennzeichnet, dass** wenigstens einer der Testelementhalter andere Testelemente enthält als die Testelemente anderer Testelementhalter.

19. Automatisiertes Analysegerät nach Anspruch 18, **dadurch gekennzeichnet, dass** die anderen Testelemente potentiometrische Testelemente und die Testelemente der übrigen Testelementhalter kolorimetrische Testelemente sind.

20. Verfahren zum Abgeben oder Aufnehmen einer Flüssigkeit in oder auf ein Testelement, umfassend:
Bereitstellen eines Testelementhalters nach Anspruch 1;
Bereitstellen eines Testelements mit Identifizierungsmarkierungen;
Bereitstellen einer stationären Sonde;
Lesen der Identifizierungsmarkierungen zum Bestimmen, welcher Test durchgeführt werden soll; und
Bewegen des Testelements und der Abdeckung in eine Position zum Ausrichten eines der Mehrzahl von Löchern in Ausrichtung mit der Sonde in Abhängigkeit von dem durchzuführenden Test.

21. Automatisiertes Analysegerät nach einem der Ansprüche 8 bis 19, das ein tierärztliches Analysegerät ist, das konfigurierbar ist, um einen T4-Assay durchzuführen.

## Revendications

1. Support d'élément de test (23) pour un analyseur automatique comprenant :
une cartouche de partie de corps pour maintenir une pluralité d'éléments de test, et **caractérisée par** :
un guide de sonde (8) adapté pour recevoir une sonde (24) afin de positionner la sonde (24) dans un alignement souhaité avec un élément de test (11), le guide de sonde (8) étant situé sur la partie supérieure de, et de manière solidaire à la cartouche et comprenant un couvercle disposé sur la cartouche de partie de corps et les éléments de test (11) ;
dans lequel :
le guide de sonde (8) comprend une pluralité d'ouvertures (22) et dans lequel au moins une ouverture est orientée dans une direction différente de l'autre (des autres) ouverture (s) .

2. Support d'élément de test selon la revendication 1, comprenant en outre une surface s'étendant à distance du couvercle et entourant au moins une partie de l'ouverture.

3. Support d'élément de test selon la revendication 2, dans lequel la surface est cylindrique.

4. Support d'élément de test selon la revendication 2, dans lequel la surface a la forme d'un cône tronqué.

5. Support d'élément de test selon la revendication 2, dans lequel la surface n'est pas perpendiculaire au couvercle.

6. Support d'élément de test selon la revendication 5, dans lequel la pluralité d'ouvertures comprend trois ouvertures, et la surface de l'une des ouverture n'est pas perpendiculaire au couvercle.

7. Support d'élément de test selon la revendication 1 ou 2, dans lequel le couvercle est solidaire du reste des éléments de test.

8. Analyseur automatique comprenant :
◆ une alimentation de fluide mobile (2) ;
◆ un support d'élément de test (23) selon l'une quelconque des revendications 1 à 7 ; et
◆ une sonde (24).

9. Analyseur automatique selon la revendication 8, dans lequel le support d'élément de test est disposé à l'intérieur de l'alimentation de fluide mobile.

10. Analyseur automatique selon la revendication 8 ou la revendication 9, dans lequel l'analyseur est un analyseur de bureau.

11. Analyseur automatique selon l'une quelconque des revendications 8 à 10, dans lequel l'alimentation de fluide mobile comprend une section d'alimentation de fluide et un support de pointe de sonde.

12. Analyseur automatique selon la revendication 11, dans lequel la section d'alimentation de fluide comprend un évidement et le support de pointe de sonde comprend un évidement.

13. Analyseur automatique selon la revendication 11 ou la revendication 12, dans lequel l'alimentation de fluide et le support de pointe de sonde sont solidaires.

14. Analyseur automatique selon l'une quelconque des revendications 8 à 13, dans lequel l'alimentation de fluide mobile comprend en outre un évidement pour le support d'élément de test.

15. Analyseur automatique selon la revendication 14, dans lequel l'évidement est disposé entre l'alimentation de section d'alimentation de fluide et le support de pointe de sonde.

16. Analyseur automatique selon l'une quelconque des revendications 8 à 15, dans lequel la sonde comprend une buse d'aspiration et/ou de distribution.

17. Analyseur automatique selon l'une quelconque des revendications 8 à 16, dans lequel le support d'élément de test comprend une pluralité de supports de test.

18. Analyseur automatique selon la revendication 17, dans lequel au moins l'un de supports d'élément de test contient des éléments de test différents des éléments de test des autres supports d'élément de test.

19. Analyseur automatique selon la revendication 18, dans lequel des différents éléments de test sont des éléments de test potentiométriques et les éléments de test des autres supports d'élément de test sont des éléments de test colorimétriques.

20. Procédé pour distribuer ou aspirer un fluide dans ou sur un élément de test, comprenant les étapes consistant à :
◆ prévoir un support d'élément de test selon la revendication 1 ;
prévoir un élément de test ayant des marques d'identification sur celui-ci ;
prévoir une sonde fixe ;
◆ lire les marques d'identification pour déterminer quel test doit être réalisé ; et
◆ déplacer l'élément de test et le couvercle dans une position pour aligner l'un de la pluralité de trous en alignement avec la sonde en fonction du test à réaliser.

21. Analyseur automatique selon l'une quelconque des revendications 8 à 19, qui est un analyseur vétérinaire pouvant être configuré pour réaliser un essai T4.
